# NEUE EUROPÄISCHE PATENTSCHRIFT

(11) **EP 0 197 429 B2**
(45) Veröffentlichungstag und Bekanntmachung des Hinweises auf die Entscheidung über den Einspruch: **15.01.1997**
(45) Hinweis auf die Patenterteilung: 14.12.1988
(21) Anmeldenummer: 86104101.0
(22) Anmeldetag: 25.03.1986
(51) Int. Cl.: D06B 3/20, D06B 3/12

(54) **Vorrichtung zur Einsparung von Wasser bei Waschmaschinen**
Apparatus for saving water in washing machines
Installation permettant d'économiser l'eau de lavage

(30) Priorität: 02.04.1985 DE 3511949
(43) Veröffentlichungstag der Anmeldung: 15.10.1986
(73) Patentinhaber: Babcock Textilmaschinen GmbH, 21220 Seevetal (DE)
(72) Erfinder: Tischbein, Claus, D-2110 Buchholz 24 (DE)
(74) Vertreter: Planker, Karl-Josef, Dipl.-Phys.

(56) Entgegenhaltungen:
- EP-A- 0 022 042
- EP-A- 0 047 911
- DE-A- 1 610 889
- DE-A- 2 518 770
- DE-A- 2 701 912
- DE-A- 2 701 986
- DE-A- 3 007 885
- DE-A- 3 423 154
- DE-C- 2 521 093
- FR-A- 1 400 001
- FR-A- 2 001 281
- US-A- 4 479 370
- Sonderdruck aus Wirkerei- und Strickerei-Technik Nr. 6 (1979) "Die weiterentwickelte Trikoflex-Waschmaschine für Pol- und Maschen- sowie für Webware"
- Prospekt "Die Trikoflex-Waschmaschine für die Breitbehandlung von Maschen-, Pol- und Webware"
- Prospekt "Das universelle Breitwaschsystem für die Behandlung von Maschen-, Pol- und Webware"
- Sonderdruck aus Melliand Textilberichte 61 (1880), 258-261; H. Holder "Neue Breitwaschmaschinen", Bild 3
- Melliand Textilberichten, 1/1972 S. 67-69

## Beschreibung

Die Erfindung betrifft eine Vorrichtung gemäß dem Oberbegriff des Anspruchs 1.

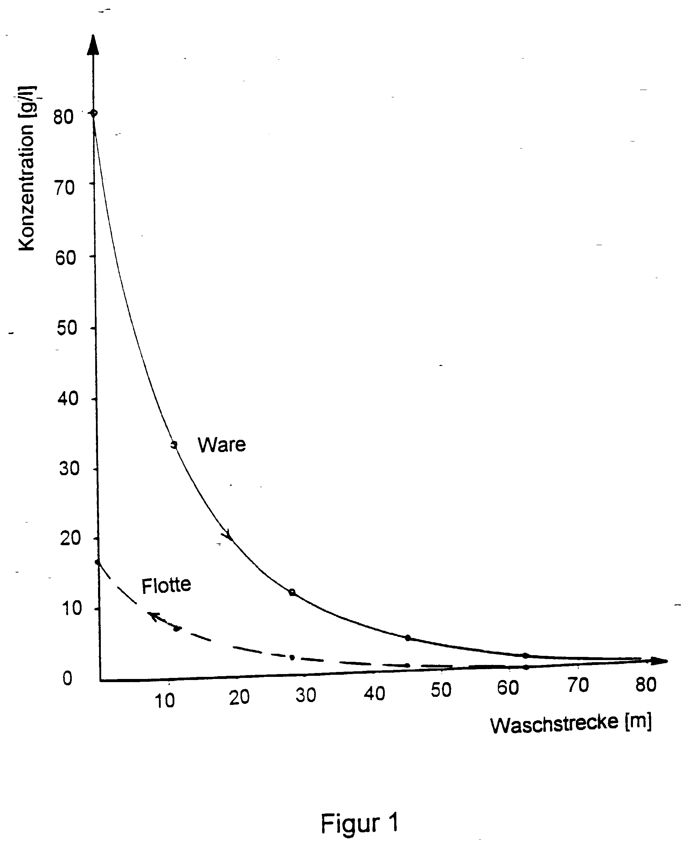

Wird der Verlauf der Konzentration des aus der Ware auszuwaschenden Mittels auf der Ware und im Waschwasser bei an sich bekannten Waschmaschinen für die Lösungswäsche mit normaler Gegenstromführung der Waschflotte durch die Behandlung gemessen, dann stellt sich heraus, wie Figur 1 erkennen läßt, daß am Ende der Behandlung, wenn die Waschflotte aus der Behandlung abgeführt wird, die Konzentration in der Flotte gegenüber der Konzentration in der Ware sehr gering ist. Das bedeutet, daß das für das Auswaschen zugeführte Frischwasser nur in geringem Maße ausgenutzt worden ist.. Das ist bei den heutigen Wasserpreisen nicht vertretbar.

Die Erfindung geht von einer Vorrichtung aus, die durch DE-A-610 889 bekannt geworden ist. Bei dieser Vorrichtung befinden sich die Sammelbehälter der einzelnen Behandlungsbereiche innerhalb des Gehäuses. Die unteren Umlenkwalzen sind in den Sammelbehältem angeordnet, so daß die Warenbahn jedesmal, wenn sie um eine untere Umlenkwalze läuft, in das in dem Sammelbehälter befindliche Flüssigkeitsbad eintaucht. Jeder Behandlungsbereich ist mit einem Quetschwerk ausgestattet, mit dem die von der Ware aus dem Behandlungsbereich mitgeschleppte Flotte aus der Ware herausgedrückt wird. Die abgetrennte Flotte wird aufgefangen und über ein Ableitrohr in den Sammelbehälter eines anderen Behandlungsbereichs eingeführt, in welchem die Behandlung der Warenbahn weniger fortgeschritten ist.

Bei einer anderen Vorrichtung, die in einer Arbeit von Uwe Bockelmann unter dem Titel "Die weiterentwickelte Trikoflex-Waschmaschine für Pol- und Maschen- sowie Webware" in einem Sonderdruck aus Wirkerei- und Strickerei-Technik, Nr. 6 (1979) beschrieben worden ist, wird die Waschflotte innerhalb der einzelnen Behandlungsbereiche teilweise umgewälzt und auf die auf speziell ausgestalteten Rillentrommeln geführte Warenbahn durch Spritzrohre aufgebracht. Auch hierbei sind am Ausgang des Behandlungsbereichs Quetschwalzen vorhanden, welche ein Mitführen verbrauchter Waschflotte zum nachfolgenden Behandlungsbereich, in welchem die Behandlung der Warenbahn weiter fortgeschritten ist, verhindern. Eine Teilmenge der in einem Behandlungsbereich verbrauchten Waschflotte wird hierbei entgegen der Laufrichtung der Warenbahn in den vorangehenden Behandlungsbereich gepumpt, in welchem die Behandlung der Warenbahn weniger fortgeschritten ist.

Durch die Erfindung soll die Aufgabe gelöst werden, eine Vorrichtung gemäß dem Oberbegriff des Anspruchs 1 zu schaffen, die eine bessere Ausnutzung des Waschwassers gewährleistet und somit einen sparsameren Verbrauch von Waschwasser erreicht. Diese Aufgabe wird gemäß der Erfindung durch die kennzeichnenden Merkmale des Anspruchs 1 gelöst.

Vorteilhaft sollen hinter den horizontalen oder leicht geneigten Warenbahnführungen Warenbahnführungswalzen angeordnet sein, bei denen die erste Walze beim Umlaufen an der Warenbahnoberseite und die zweite Walze an der Warenbahnunterseite anliegt, so daß die Flotte einmal von der einen Seite und einmal von der anderen Seite durch die Warenbahn hindurchgedrückt wird, wodurch der Waschvorgang unterstützt wird. Zweckmäßig sollen die Sammelbehälter mit den Trennwänden versehen sein, durch die die Sammelbehälter in jeweils zwei Abteilungen unterteilt sind, in die Ableitrohre für die Flotte aus der Behandlung aus unterschiedlichen Behandlungsbereichen einmünden. Dabei sollen die Trennwände mit die beiden Abteilungen eines Sammelbehälters verbindenden Drosselöffnungen versehen sein. Oberhalb der Sammelbehälter kann ein umlaufendes Siebband angeordnet sein, durch welches wasserunlösliche Verunreinigungen aus der umgewälzten Waschflotte entfernt werden.

Am Ein- und Austritt der Warenbahn in die und aus der Behandlungsvorrichtung können Wasserschlösser vorgesehen und zwischen den Behandlungsbereichen der Vorrichtung Trennwände, gegebenenfalls. ebenfalls mit Wasserschlössem, angebracht sein.

Es hat sich als zweckmäßig erwiesen, die Druckleitungen der Pumpen mit Heizvorrichtungen für die umgewälzte Flotte zu versehen und den Volumenstrom der von den Pumpen umgewälzten Flottenmengen variierbar zu gestalten.

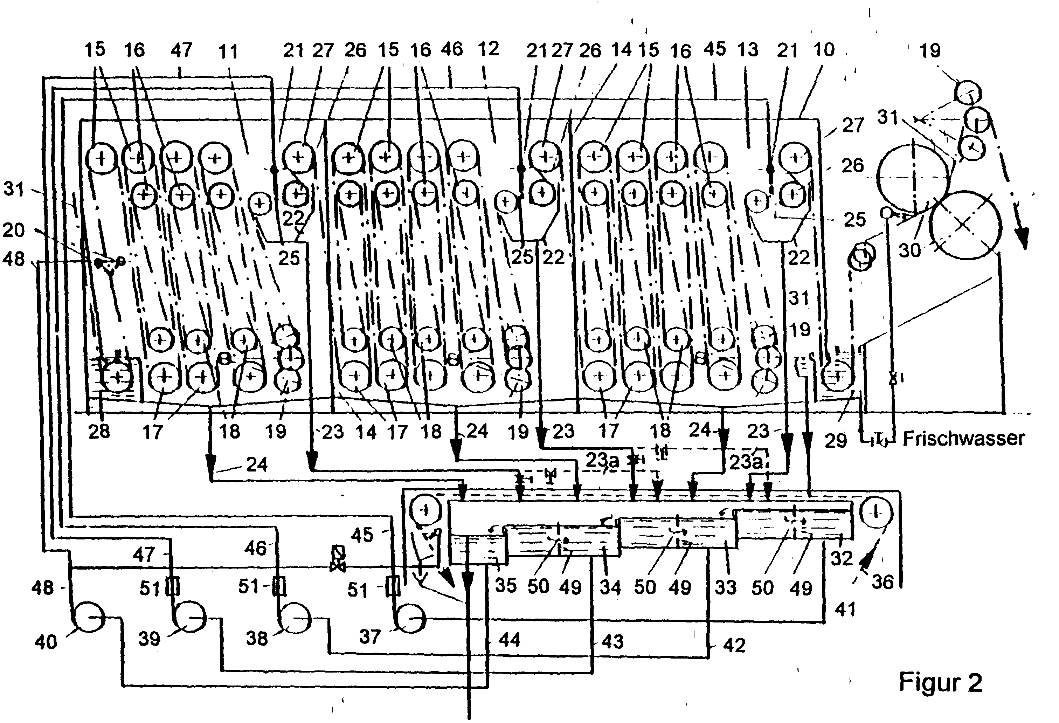

Auf den beiliegenden Zeichnungen ist in Fig. 2 ein Ausführungsbeispiel für eine erfindungsgemäße Vorrichtung dargestellt, an Hand derer die Erfindung nachfolgend noch weiter erläutert werden soll. Das dargestellte Ausführungsbeispiel zeigt eine Waschmaschine, bei der in einem bis auf einen Ein- und Austritt für die Warenbahn 31 geschlossenen Gehäuse 10 Reihen von oberen 15, 16 und unteren Umlenkwalzen 17, 18 angeordnet sind, um die die Warenbahn beim Durchlaufen der Behandlung in etwas senkrechten Schleifen herumgeführt wird. Man erkennt, daß das Gehäuse 10 durch Trennwände 14 und Durchtrittsöffnungen für die Warenbahn in verschiedene Behandlungsbereiche 11, 12, 13 unterteilt ist. In jedem Behandlungsbereich wird die Warenbahn noch über eine Pendelwalze zum Ausgleich von Zugspannungen in der Bahn geleitet. In jedem Behandlungsbereich befindet sich, wie man erkennen kann, eine gegenüber der Horizontalen leicht geneigte Warenbahnführung 25, in der die Waschflotte mittels Flachstrahldüsen 21 der Warenbahn mit einem solchen Druck zugeführt wird, daß sie in den Faden- und Faserverband eindringen und dort vorhandene Flotte nach unten aus der Warenbahn herausdrängen kann. Diese Flotte wird dann im Behälter 22 aufgefangen und zunächst aus der Behandlung abgeführt. Über die weitere Flottenführung wird weiter unten noch zu berichten sein.

In der Warenbahn befindet sich nach diesem Austauschvorgang dann Flotte mit geringerer Konzentration als vorher. Damit sich diese Flotte gut und gleichmäßig in der Warenbahn verteilt, sind hinter der leicht geneigten Warenbahnführung Umlenkwalzen 26, 27 angeordnet, durch die beim Umlaufen durch die Bahn auf die Warenbahn, einmal von der einen und einmal von der anderen Seite ein gewisser Druck ausgeübt wird, durch den ein Flottenausgleich in der Bahn erfolgt.

Für die Behandlung tritt die Warenbahn 31 über ein Wasserschloß 28 in den ersten Behandlungsbereich 11 ein, wo ihr über Flusenabspritzdüsen 20 Behandungsflotte zugeführt wird, die dabei gleichzeitig lose an der Warenbahn anhaftende Flusen entfernt. Nach dem Umlaufen verschiedener Umlenkwalzen 15, 16, 17, 18 für eine Verweilbehandlung in diesem Behandlungsbereich zum Konzentrationsausgleich zwischen der auf der Warenbahn befindlichen und der zugeführten Flotte, wird die Warenbahn der ersten gegen die Horizontale leicht geneigten Warenführung 25 zugeführt, wo mittels der Flachstrahldüse 21 der erste Flottenaustausch erfolgt. Das gleiche spielt sich in den nachfolgenden Behandlungsbereichen 12 und 13 ab. Danach wird die Warenbahn über ein Wasserschloß 29 aus dem Gehäuse 10 herausgeführt und mittels Quetschwalzen einer Endabquetschung unterworfen.

Es liegt natürlich im Rahmen der Erfindung, daß mehrere Gehäuse 10 mit Behandlungsbereichen 11, 12, 13 und Endquetschwerken 30 hintereinandergeschaltet sind. Wie Fig. 2 weiterhin erkennen läßt, wird das Frischwasser nur am Ende der Behandlung zugeführt, beispielsweise über das Wasserschloß 29 am Austritt der Warenbahn aus der Behandlung bzw. am Endquetschwerk 30. Von hier gelangt es über einen Überlaufbehälter in einen Sammelbehälter 32, der mit weiteren Sammelbehältem 33, 34, 35 in einer kaskadenförmigen Reihe verbunden ist, so daß die Flotte im Gegenstrom zur Laufrichtung der Warenbahn durch diese Behälter geführt wird. In diese Sammelbehälter münden aus den verschiedensten Bereichen der Waschmaschine kommende Ableitrohre 23, 24 ein, wobei die Ableitrohre 23 mit den Auffangbehältem 22 an den Warenführungen 25 verbunden sind und die Ableitrohre 24 mit Auffangrinnen am Boden der Behandlungsbereiche 11, 12, 13.

Die Sammelbehälter 32, 33, 34 sind durch Trennwände 49 unterteilt, in denen sich Drosselöffnungen 50 befinden. Am unteren Teil der Behälter sind die Saugleitungen 41, 42, 43, 44 von Pumpen 37, 38, 39, 40 angeschlossen, deren Druckleitungen 45, 46, 47, 48 die Flotte den Düsen 20 und 21 unter Druck zuführen. In den Druckleitungen 37, 38, 39 sind Heizvorrichtungen 51 für eine Wiederaufheizung der Flotte angeordnet. Oberhalb der Sammelbehälter ist ein umlaufendes Siebband 36 zum Auffangen von mit Flotte mitgeführten Verunreinigungen angebracht, welche dann mittels einer Düse 52 mit verbrauchter Flotte aus der Behandlung entfernt werden.

Durch das erfindungsgemäße Verfahren lassen sich z. B. mit einer Waschmaschine der beschriebenen Art, erhebliche Frischwassermengen einsparen, dadurch, daß schon einmal benutzte und damit in gewissem Umfang schon verbrauchte Waschflotte wiederverwendet wird, indem sie in Behandlungsbereiche zurückgeführt wird, in denen noch ein ausreichendes Konzentrationsgefälle zwischen der auf der Warenbahn befindlichen Flotte und der wieder zugeführten Flotte vorhanden ist. Statt der reinen Umwälzung der Flotte auf dem Wege Auffangbehälter 22, Ableitrohr 23, Sammelbehälter 34, Saugleitung 43, Druckleitung 47, Flachstrahldüse 21 bzw. Auffangbehälter 22, Ableitrohr 23, Sammelbehälter 33, Saugleitung 42, Druckleitung 46, Flachstrahldüse 21, kann also, wie für die Behandlungsbereiche 11 und 12 dargestellt ist, die Flotte auf dem Wege Auffangbehälter 22, Ableitrohr 23, 23a, Sammelbehälter 33, Saugleitung 42, Druckleitung 46, Flachstrahldüse 21 bzw. Auffangbehälter 22, Ableitrohr 23, 23a, Sammelbehälter 32, Saugleitung 41, Druckleitung 45, Flachstrahldüse 21 durch die Behandlung geführt werden, also in Bezug auf die Laufrichtung der Warenbahn durch die Behandlung in weiter fortgeschrittenen Behandlungsbereichen wieder in die Behandlung eingeleitet werden.

## Patentansprüche

1. Vorrichtung zur Lösungswäsche einer Warenbahn
mit einem bis auf eine Eintritts- und eine Austrittsöffnung für die Warenbahn (31) geschlossenen Gehäuse (10), durch das die Warenbahn (31) über obere und unter Reihen von Umlenkrollen (15, 16, 17, 18) im wesentlichen in senkrechten Schleifen hindurchgeführt wird,
wobei das Gehäuse (10) in mehrere Behandlungsbereiche (11, 12, 13) für die Warenbahn (31) unterteilt ist,
wobei sich in jedem Behandlungsbereich (11, 12, 13) eine kurze Warenbahnführung (25) befindet, in der die auf der und in der Warenbahn (31) befindliche Flotte aus der Warenbahn (31) herausgedrückt wird,
wobei jedem Behandlungsbreich (11, 12,13) jeweils ein Sammelbehälter (34, 33, 32) zugeordnet ist,
wobei die herausgedrückte Flotte durch einen an der Warenbahnführung (25) unter der Warenbahn (31) befindlichen Auffangbehälter (22) gesammelt wird,
wobei mit dem Auffangbehälter (22) ein erstes Ableitrohr (23) verbunden ist, welches in den Sammelbehälter (34, 33, 32) eines Behandlungsbereiches (11, 12, 13) einmündet und
wobei die Waschflotte durch die kaskadenartig angeordneten Sammelbehälter (32, 33, 34) nacheinander entgegen der Laufrichtung der Warenbahn (31) geführt wird,
dadurch gekennzeichnet, daß
die kurze Warenbahnführung (25), in der das Herausdrücken der Flotte erfolgt, horizontal oder in Warenlaufrichtung leicht geneigt ist, wobei die Waschflotte mit einer oberhalb der Warenbahn (31) angeordneten Flachstrahldüse (21) in die Warenbahn (31) hineindrückt und die auf und in der Warenbahn (31) befindliche Flotte auf der Unterseite aus der Warenbahn (31) herausgedrückt wird,
die Flachstrahldüse (21) mit der Druckseite einer Flüssigkeitspumpe (39, 38, 37) verbunden ist, deren Saugleitung (43, 42, 41) mit einem unterhalb des Gehäuses (10) angeordneten, dem jeweiligen Behandlungsbereich (11, 12, 13) zugeordneten Sammelbehälter (34, 33, 32) verbunden ist, in den das erste Ableitrohr (23) mündet, und
Behandlungsbereiche (11, 12) vorgesehen sind, bei denen mindestens je eine Teilmenge der aus dem Auffangbehälter (22) abgeleiteten Flotte durch ein zweites Ableitrohr (23a) in einen Sammelbehälter (33, 32) zurückgeführt wird, aus dem Waschflotte der Flachstrahldüse (21) eines anderen, in Laufrichtung der Warenbahn (31) gelegenen Behandlungsbereichs (12, 13) zugeführt wird, in dem die Behandlung weiter fortgeschritten ist.

2. Vorrichtung nach Anspruch 1 dadurch gekennzeichnet, daß hinter den Warenbahnführungen (25) Warenbahnführungwalzen (26, 27) angeordnet sind, wobei die Warenbahn beim Umlaufen der ersten Walze (26) an dieser mit der Warenbahnoberseite und bei der zweiten Walze (27) mit der Warenbahnunterseite anliegt.

3. Vorrichtung nach Anspruch 1 oder 2, dadurch gekennzeichnet, daß die Sammelbehälter (32, 33, 34) mit Trennwänden (49) versehen sind, durch die die Sammelbehälter in jeweils zwei Abteilungen unterteilt sind, in die Ableitrohre (23, 24) für die Flotte aus der Behandlung aus unterschiedlichen Behandlungsbereichen einmünden.

4. Vorrichtung nach Anspruch 3, dadurch gekennzeichnet, daß die Trennwände (49) mit die beiden Abteilungen eines Sammelbehälters verbindenden Drosselöffnungen (50) versehen sind.

5. Vorrichtung nach Anspruch 1 bis 4, dadurch gekennzeichnet, daß oberhalb der Sammelbehälter (32, 33, 34, 35) ein umlaufendes Siebband (36) angeordnet ist.

6. Vorrichtung nach Anspruch 1 bis 5, dadurch gekennzeichnet, daß am Ein- und Austritt der Warenbahn (31) in die und aus der Behandlungsvorrichtung Wasserschlösser (28, 29) vorgesehen sind.

7. Vorrichtung nach Anspruch 1 bis 6, dadurch gekennzeichnet, daß zwischen den Behandlungsbereichen (11, 12, 13) der Vorrichtung Trennwände (14), gegebenenfalls. ebenfalls mit Wasserschlössem, angebracht sind.

8. Vorrichtung nach Anspruch 1 bis 7, dadurch gekennzeichnet, daß die Druckleitungen der Pumpen mit Heizvorrichtungen (51) für die umgewälzte Flotte versehen sind.

9. Vorrichtung nach Anspruch 1 bis 8, dadurch gekennzeichnet, daß der Volumenstrom der von den Pumpen (37, 38, 39, 40) umgewälzten Flottenmengen variierbar ist.

## Claims

1. Apparatus for rinsing a textile web
having a housing (10) that is closed except for one entry opening and one exit opening for the fabric web (31), through which the fabric web (31) is guided essentially in vertical loops over top and bottom rows of return rolls (15, 16, 17, 18),
the housing (10) being divided into several treatment sections (11, 12, 13) for the fabric web (31),
in which a short fabric guiding system (25) is located in each treatment section (11, 12, 13) where any washing liquor in or on the fabric web (31) is pressed out of the fabric web (31),
in which an overall collecting tank (34, 33, 32) is assigned to each treatment section (11, 12, 13),
in which the washing liquor that has been pressed out is collected in a collecting vessel (22) arranged on the fabric guiding system (25) underneath the fabric web (31),
in which a first discharge pipe (23) is connected to the collecting vessel (22) and opens into the overall collecting tank (34, 33, 32) of a treatment section (11, 12, 13) and
in which the washing liquor is fed through the overall collecting tanks (32, 33, 32) arranged one after the other in a cascade design running counter to the running direction of the fabric web (31),
characterised in that
the short fabric guiding system (25) in which the liquor is pressed out is horizontal or slightly inclined to the run direction of the fabric, the washing liquor is pressed into the fabric web (31) from a flat jet nozzle (21) arranged above the fabric web (31) and the liquor on and in the fabric web (31) is pressed out of the fabric web (31) at the back,
the flat jet nozzle (21) is connected to the pressure side of a pump for liquids (39, 38, 37), the suction pipes (43, 42, 41) of which are connected to the overall collecting tanks (34, 33, 32) assigned to the respective treatment sections (11, 12, 13) and arranged underneath the housing (10), into which the first discharge pipe (23) opens, and
treatment sections (11, 12) are provided such that at least a partial amount of the liquor discharged from the collecting vessel (22) is returned via a second discharge pipe (23a) to an overall collecting tank (33, 32), from where liquor is re-fed from the flat jet nozzle (21) of another treatment section (12, 13) in the running direction of the fabric web (31), where the treatment is at a more advanced stage.

2. Apparatus as claimed in claim 1, characterised in that fabric guide rollers are arranged downstream of the fabric web guiding system (25) such that, as it passes over the first roll (26), the pile side of the fabric web is in contact therewith and the underside of the fabric web is in contact with the second roll (27).

3. Apparatus as claimed in claim 1 or 2, characterised in that the overall collecting tanks (32, 33, 34) are provided with dividing walls (49) by means of which the overall collecting tanks are divided into two respective sections into which the discharge pipes (23, 24) for the liquor from the treatment flow from different treatment sections.

4. Apparatus as claimed in claim 3, characterised in that the dividing walls (49) are provided with throttle openings (50) connecting the two sections of a collecting tank.

5. Apparatus as claimed in claims 1 to 4, characterised in that a rotating screen belt (36) is arranged above the collecting tanks (32, 33, 34, 35).

6. Apparatus as claimed in claims 1 to 5, characterised in that water locks (28, 29) into and out of the treatment machine are arranged at the entry and the exit of the fabric web (31).

7. Apparatus as claimed in claims 1 to 6, characterised in that water locks are also provided in dividing walls (14) between the treatment sections (11, 12, 13) of the apparatus if required.

8. Apparatus as claimed in claims 1 to 7, characterised in that the pressure pipes of the pump are provided with heating equipment (51) for the circulating liquor.

9. Apparatus as claimed in claims 1 to 8, characterised in that the throughput rates of the liquor volume circulated by the pumps (37, 38, 39, 40) can be varied.

## Revendications

1. Dispositif pour le dégraissage d'une bande de matière, comportant un boîtier (10) fermé, sauf des ouvertures d'entrée et de sortie pour la bande de matière (31), à travers lequel la bande de matière (31) est guidée essentiellement en boucles verticales par des lignes supérieures et inférieures de rouleaux de renvoi (15, 16, 17, 18),
dans lequel le boîtier (10) est divisé en plusieurs zones de traitement (11, 12, 13) pour la bande de matière (31),
dans lequel il existe un court guidage de bande (25) dans chaque zone de traitement (11, 12, 13), dans lequel le bain se trouvant sur et dans la bande de matière (31) est chassé par pression hors de la bande de matière (31),
dans lequel un récipient collecteur (34, 33, 32) est associé à chaque zone de traitement (11, 12, 13),
dans lequel le bain chassé par pression est recueilli par un récipient de recueil (22) situé à l'endroit du guidage de bande (25), sous la bande de matière (31),
dans lequel une première conduite d'évacuation (23) est reliée au récipient de recueil (22) et débouche dans le récipient collecteur (34, 33, 32) d'une zone de traitement (11, 12, 13), et
dans lequel le bain de lavage est conduit à travers les récipients collecteurs (32, 33, 34) agencés en cascade l'un après l'autre dans le sens inverse de celui du déplacement de la bande de matière (31),
caractérisé en ce que
le court guidage de bande (25), dans lequel la pression d'expulsion du bain se produit, est disposé horizontalement ou dans la direction de déplacement de la matière, de sorte que le bain de lavage est introduit sous pression dans la bande de matière (31) à l'aide d'un bec à jet plat (21) situé au-dessus de la bande de matière (31) et que le bain se trouvant sur et dans la bande de matière (31) est chassé par pression de la bande de matière (31) par la face inférieure,
le bec à jet plat (21) est relié au côté refoulement d'une pompe à liquide (39, 38, 37), dont la conduite d'aspiration (43, 42, 41) est reliée à un récipient collecteur (34, 33, 32) situé sous le boîtier (10), associé à une zone de traitement respective (11, 12, 13) et dans lequel débouche la première conduite d'évacuation (23), et
les zones de traitement (11, 12) sont agencées pour qu'une partie du bain sortant du récipient de recueil (22) soit ramenée chaque fois, à travers une seconde conduite d'évacuatiion (23a), dans un récipient collecteur (33, 32) à partir duquel le bain de lavage est conduit vers le bec à jet plat (21) d'une autre zone de traitement située dans le sens de déplacement de la bande de matière (31).

2. Dispositif selon la revendication 1, caractérisé en ce que des rouleaux guideurs (26, 27) sont installés en aval des guidages (25) de la matière, la matière tournant autour du premier rouleau (26) se pressant contre celui-ci par sa face supérieure et contre le deuxième rouleau (27) par sa face inférieure.

3. Dispositif selon la revendication 1 ou 2, caractérisé en ce que les récipients collecteurs (32, 33, 34) sont pourvus de cloisons (49) par lesquelles chaque collecteur est divisé en deux compartiments dans lesquels débouchent les conduites d'évacuation (23, 24) pour le bain venant du traitement dans les différentes zones de traitement.

4. Dispositif selon la revendication 3, caractérisé en ce que les cloisons (49) sont munies d'ouvertures d'étranglement (50) qui relient les deux compartiments d'un récipient collecteur.

5. Dispositif selon la revendication 1 à 4, caractérisé en ce qu'un ruban filtrant (36) tournant est placé au-dessus des récipients collecteurs (32, 33, 34, 35).

6. Dispositif selon la revendication 1 à 5, caractérisé en ce que, à l'entrée et à la sortie de la bande de matière (31), sont prévues des cascades d'arrosage (28, 29) à l'intérieur et à l'extérieur du dispositif.

7. Dispositif selon la revendication 1 à 6, caractérisé en ce que, entre les zones de traitement (11, 12, 13) du dispositif, sont prévues des cloisons (14) équipées le cas échéant de cascades d'arrosage.

8. Dispositif selon la revendication 1 à 7, caractérisé en ce que les conduites de pression des pompes sont équipées d'un dispositif de chauffage (51) pour le bain recyclé.

9. Dispositif selon la revendication 1 à 8, caractérisé en ce que le débit du bain recyclé par les pompes (37, 38, 39, 40) peut être modifié.
